Europäisches Patentamt

European Patent Office

Office européen des brevets

(11) Publication number: **0 233 707**
**A1**

## (12) EUROPEAN PATENT APPLICATION

(21) Application number: **87300508.6**

(22) Date of filing: **21.01.87**

(51) Int. Cl.[4]: **G 02 B 6/44**

(30) Priority: **22.01.86 GB 8601540**

(43) Date of publication of application:
**26.08.87 Bulletin 87/35**

(84) Designated Contracting States: **DE FR IT NL**

(71) Applicant: **Telephone Cables Limited**
**Chequers Lane**
**Dagenham Essex RM9 6QA (GB)**

(72) Inventor: **Powell, Robert John Wale**
**24 Stapenhill Road**
**Wembley Middlesex HAO 3JJ (GB)**

(74) Representative: **Kirby, Harold Victor Albert**
**The General Electric Company, p.l.c. Central Patent**
**Department Wembley Office GEC Research Centre East**
**Lane**
**Wembley Middlesex HA9 7PP (GB)**

(54) Optical fibre cables.

(57) An optical fibre cable incorporates, within a cover (8) loosely accommodating one or more optical fibres, an additive or additive mixture capable of absorbing water and of gradually releasing oxygen, such as oxygen enriched molecular sieve material (6), and a catalytic substance effective to cause the oxygen to combine with free hydrogen (5).

Fig.2.

EP 0 233 707 A1

**Description**

Optical Fibre Cables

This invention relates to optical fibre cables, that is to say cables incorporating one or more optical fibres extending longitudinally within a surrounding cover.

It is now known that transmission losses of optical fibres, at least for certain wavelengths, tend to increase with the age of the fibres, due to the gradual absorption of hydrogen by the fibres, even where they are individually provided with protective coatings of synthetic plastics material. It has accordingly been proposed to incorporate within an optical fibre cable a quantity of material which is capable of collecting free hydrogen either by absorption or by chemical action, for example as described in co-pending Patent Application No. 8428102, in order to reduce the amount of hydrogen available within the cable which could have a detrimental effect on the fibre or fibres contained therein.

According to the present invention an optical fibre cable incorporates, within the said cover, an additive or additive mixture capable of absorbing water and of gradually releasing oxygen, and a catalytic substance effective to cause the oxygen to combine with free hydrogen.

The gradual liberation of oxygen with time ensures the continual cleaning up of hydrogen, not only that present initially within the cable, but also that which is gradually evolved or penetrates into the cable during the life of the cable.

The additive may, for example, consist of oxygen-enriched molecular sieve material in which the action of absorbing water gives rise to the gradual liberation of oxygen.

The catalytic substance preferably consists of palladium, which may be in the form of a coating on a finely divided carrier material. For example, palladised carbon, that is to say charcoal particles coated with palladium, is especially suitable.

The fibre or fibres may be loosely accommodated within one or more channels within the cable cover preferably following a path which, between the ends of the cable, has a length which is greater than that of the cable in order to prevent any undue strain being placed on the fibre or fibres. The additive or additives together with the catalytic substance may also be contained within the said channel or channels, for example as coatings on the channel or fibre walls and/or, in the case where a channel contains a plurality of fibres, in the interstices between the fibres themselves, or alternatively distributed within a paste or jelly-like material permeable to hydrogen, such as petroleum jelly or similar material, which permits a degree of movement of the fibre or fibres within the respective channel or channels as the cable is bent or flexed.

In an alternative embodiment where the channel walls are permeable to hydrogen the catalytic substance and possibly also the additive or additives may be contained within a longitudinally extending channel which does not itself contain any optical fibres. For example where the optical fibres are contained within one or more tubes disposed within the surrounding cover, the catalytic substance and the additive or additives may be contained either within a separate tube or in the space or spaces within the cover around the fibre-containing tube or tubes and/or, in the case where the cover contains a plurality of tubes, in the interstices between the tubes.

However the catalytic substance and the additive or additives may be incorporated within the cable in another convenient manner. Instead of a molecular sieve material other materials capable of absorbing or reacting with water to liberate oxygen could alternatively be used, one such material being barium peroxide.

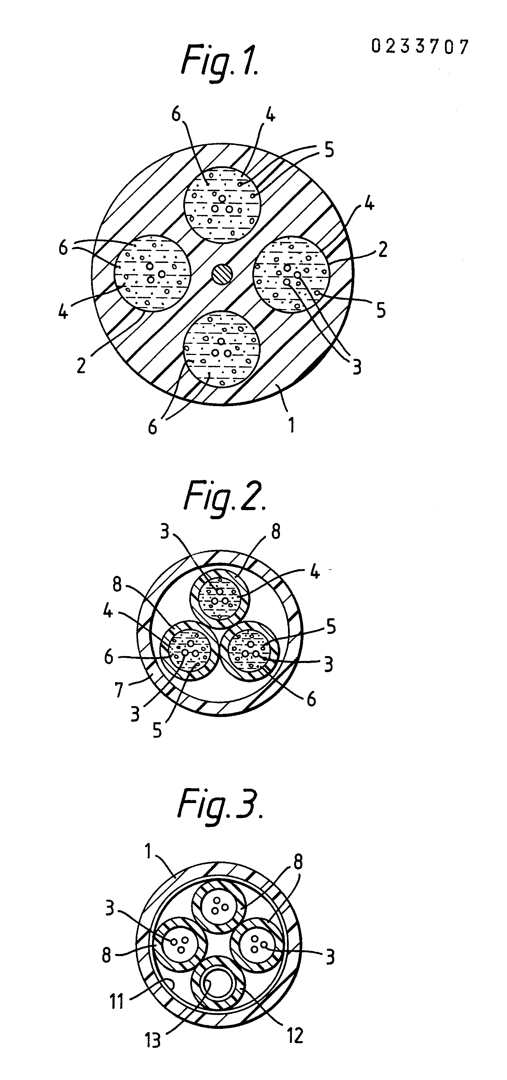

Three optical cables in accordance with the invention will now be described by way of example with reference to Figures 1 to 3 of the accompanying drawings which represent transverse sections through the three cables.

The optical fibre cable illustrated in Figure 1 comprises a cover 1 of extruded thermoplastics material, for example polyethylene, having a plurality of longitudinally-extending channels 2 in each of which are located a plurality of optical fibres as at 3, the fibres being loose within, but being of greater length than, the channels in which they are accommodated.

Each channel is filled with petroleum jelly 4 or other jelly-like substance substantially filling the spaces between the fibres and between the fibres and the wall of the channel, the petroleum jelly or the like having dispersed within it particles 5 of palladised carbon, together with oxygen enriched molecular sieve material 6, the latter being formed by baking and cooling molecular sieve material in oxygen or an oxygen rich atmosphere.

In use the palladium acts as a catalyst causing any free hydrogen and oxygen present to combine to form water which is absorbed by the molecular sieve material, this resulting in the liberation of further oxygen. By this means it is ensured that free hydrogen which may be evolved during the life of the cable, or which penetrates into the channels 2 from outside, is cleaned up and its detrimental effect substantially nullified by its combination with the liberated oxygen.

In Figure 2 there is shown an alternative form of cable comprising an extruded tubular cover 7 containing a plurality of separate tubes 8, which are conveniently also formed by extusion and each of which accommodates optical fibres 3 and is filled with petroleum jelly 4 or the like having dispersed within it particles 5 of palladised carbon and oxygen enriched molecular sieve material 6 as in the cable of Figure 1, the palladised carbon and the molecular sieve material acting in the same way as in the previously described cable to trap hydrogen which may be present within the tubes during the life of the cable.

In a modification of either of the cables illustrated in Figures 1 and 2 the petroleum jelly 4 may be omitted, the palladised carbon and the oxygen enriched molecular sieve material being incorporated within the channels 2 or tubes 8, as the case may be, in some other way, for example as coatings either on the fibres themselves or on the inner surfaces of the channels or tubes.

In a further modification illustrated in Figure 3, the optical fibres 3 are contained within separate extruded plastic tubes 8, within a cover 1 as in the cable of Figure 2; but the tubes 8 do not, in this case, contain petroleum jelly or the palladised carbon or oxygen enriched molecular sieve material. The latter two materials are, however, applied as a coating to the inner wall of the surrounding cover 1 as at 11, or within an additional tube 12 disposed within the cover as at 13. The palladised carbon and the molecular sieve material may be held in contact with the cover or tube wall by a suitable bonding medium if desired. As the plastic tubes are permeable to hydrogen the latter will tend to pass into the space containing the palladised carbon and molecular sieve material where it will be combined with oxygen with the formation of water which will be absorbed by the molecular sieve material with the liberation of further oxygen as previously described.

In another modification of the cable illustrated in Figure 2 petroleum jelly containing palladised carbon and oxygen enriched molecular sieve material, instead of being contained within the tubes 8, may alternatively be disposed in the longitudinal channels provided by the space or spaces 14 formed within the cover 7 around, and/or between the tubes.

In any of the embodiments above described the cover may be surrounded by on or more outer sheaths in accordance with known techniques. For submarine use such a cable may include a sheath of lead, although other water impervious materials may be used.

Moreover the palladised carbon and oxygen enriched molecular sieve material may be incorporated within the cable in any other convenient way.

## Claims

1. An optical cable having an outer cover accommodating one or more optical fibres, characterised in that is also incorporates, within the said cover, an additive or additive mixture capable of absorbing water and of gradually releasing oxygen, and a catalytic substance effective to cause the oxygen to combine with free hydrogen.

2. An optical cable according to Claim 1 characterised in that the additive consists of oxygen-enriched molecular sieve material in which the action of absorbing water gives rise to the gradual liberation of oxygen.

3. An optical cable according to Claim 1 or 2 characterised in that the catalytic substance consists of palladium.

4. An optical cable according to Claim 3 characterised in that the palladium is in the form of a coating on a finely divided carrier material.

5. An optical cable according to Claim 4 characterised in that the finely divided carrier material consists of charcoal particles.

6. An optical cable according to any preceding Claim characterised in that the additive or additive mixture and the catalytic substance are contained within each channel that contains one or more optical fibres.

7. An optical cable according to Claim 6 characterised in that the additive or additive mixture and the catalytic substance are coated on the channel or fibre walls.

8. An optical cable according to Claim 6 characterised in that the additive or additive mixture is contained within a paste- or jelly-like material permeable to hydrogen within the said channel.

9. An optical cable according to any one of Claims 1 to 5 characterised in that the channel walls are permeable to hydrogen and the catalytic substance, and possibly the additive or additive mixture, is contained within a longitudinally extending channel which does not contain any optical fibres.

10. An optical cable according to Claim 9 in that the optical fibres are contained in one or more separate tubes within the outer cover, and the catalytic substance, and possibly the additive or additive mixture, is contained within the space between the tube or tubes and the cover, or within a separate tube within the cover.

Fig.1.

0233707

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 142 961 (TELEPHONE CABLES LTD) * Figures 1,2,4,5; abstract; page 5, lines 23-34; page 7, lines 15-37; claims 1-7,12,13 * | 1-9 | G 02 B  6/44 |
| A | | 10 | |
| | --- | | |
| A | GB-A-2 159 978 (TELEPHONE CABLES LTD) * Figure 1; abstract; page 1, lines 1-5,48-57,67-80,88-103 * | 1-6,8, 10 | |
| | --- | | |
| A | GB-A-2 087 589 (BRITISH TELECOM) * Figure 1; abstract; page 1, line 40-52 * | 1,2 | |
| | ----- | | TECHNICAL FIELDS SEARCHED (Int. Cl.4) |
| | | | G 02 B H 01 B |

The present search report has been drawn up for all claims

| Place of search | Date of completion of the search | Examiner |
|---|---|---|
| THE HAGUE | 06-05-1987 | VAN DOREMALEN,J.C.H. |